## Europäisches Patentamt
## European Patent Office
## Office européen des brevets

(19)

(11) Numéro de publication: **0 011 029**
**B1**

(12) **FASCICULE DE BREVET EUROPEEN**

(45) Date de publication du fascicule du brevet: **23.06.82**

(51) Int. Cl.³: **C 08 F 36/18**

(21) Numéro de dépôt: **79400796.3**

(22) Date de dépôt: **25.10.79**

(54) **Polychloroprène modifié au soufre et sa préparation en présence de polysulfures organiques.**

(30) Priorité: **07.11.78 FR 7831425**

(43) Date de publication de la demande:
**14.05.80 Bulletin 80/10**

(45) Mention de la délivrance du brevet:
**23.06.82 Bulletin 82/25**

(84) Etats contractants désignés:
**BE DE FR GB IT NL**

(56) Documents cités:
**DE - A - 2 645 920**
**US - A - 1 950 439**

(73) Titulaire: **DISTUGIL**
**45-47, rue de Villiers**
**F-92200 – Neuilly/sur/Seine (FR)**

(72) Inventeur: **Branlard, Paul**
**6, place Paul Mistral**
**F-38000 – Grenoble (FR)**
Inventeur: **Merle, Jean-Pierre**
**2, rue Léo Lagrange**
**F-38130 – Echirolles (FR)**

(74) Mandataire: **Tavernier, Colette**
**RHONE POULENC RECHERCHES Service Brevets**
**Chimie et Polymères 25, Quai Paul Doumer**
**F-92408 Courbevoie Cedex (FR)**

Polychloroprène modifié an soufre et sa préparation en présence de polysulfures organiques

La présente invention a pour objet un procédé amélioré pour la préparation de latex de polychloroprène modifié au soufre.

Les polymères de chloroprene modifiés au soufre sont bien connus. Ils sont obtenus par polymérisation du chloprène, éventuellement avec un autre monomère insaturé, en présence de soufre élémentaire. Le polymère obtenu possède une structure fortement réticulée par l'intermédiaire de liaisons polysulfures et est difficile à travailler. Pour obtenir un produit de plasticité accrue le polymère est dégradé à l'aide d'agents appropriés qui produisent une rupture des liaisons polysulfures. Cette opération est connue sous le nom de peptisation. Des agents plastifiants utilisables sont décrits d'une manière générale dans le brevet américain 2.234.215.

Des procédés de peptisation en émulsion aqueuse alcaline ont été décrits par exemple dans les brevets français 1.376.314, 1.392.446, 1.393.099, 1.398.602, 2.076.922, 2.089.811 ainsi que dans le brevet américain 3.318.832. Selon ces procédés la peptisation est réalisée après la polymérisation par traitement du latex de polymère avec un disulfure d'alkylthiurame associé ou non à un dialkyldithiocarbamate ou un disulfure de xanthogène. Ces procédés ont pour principal désavantage la lenteur de la peptisation (plusieurs heures à 40°C). La réaction se poursuit pendant le traitement du latex en vue d'éliminer le monomère résiduel ainsi que pendant la phase d'isolation du caoutchouc. Par ailleurs, la plasticité des caoutchoucs obtenus varie dans le temps, ce qui représente un inconvénient sérieux pour leur mise en oeuvre et leur transformation en produits manufacturés.

Il est également connu, selon une autre technique, d'augmenter la plasticité des polymères de chloroprène modifiés au soufre à l'aide d'agents modifiants ou agents de transferts de chaine tels que le disulfures de xanthogènes, l'iodoforme ou les alkylmercaptans qui sont présents durant la polymérisation et qui agissent comme régulateurs de poids moléculaire. Ces procédé sont décrits par exemple dans le brevet français 1.457.004 et le brevet américain 3.397.173. Les copolymères modifiés obtenus peuvent encore être peptisés ultérieurement.

Enfin, le brevet français 2.008.562 (USP 3.808.183) décrit un procédé de préparation de polychloroprène modifié au soufre et au xanthogène ou à l'iodoforme selon lequel le latex de polymère est peptisé instantanément à l'aide d'un thiol.

La présente invention a pour but un procédé de préparation en une seule étape de polymères de chloroprène modifié au soufre sans agents modifants auxiliaires selon lequel la peptisation réalisée directement au cours de la polymérisation et non après achèvement de la polymèrisation selon les procédés connus.

Un procédé en une étape a déjà été décrit dans la demande de brevet allemand DE—A 2.645.920. Dans ce procédé, le chloroprène et le soufre sont copolymérisés en présence de faibles quantités de disulfure de tétraéthylthiurame, d'une amine aliphatique et avec un émulsifiant spécifique. La présence de l'amine est essentielle pour maintenir au minimum la quantité de TETD sans augmenter la consommation de catalyseur qui nuirait aux propriétés du polymère.

Le procédé selon l'invention est réalisé par copolymérisation du chloroprène avec du soufre, le chloroprène pouvant être remplacé jusqu'a 20% en poids par d'autres monomères vinyliques copolymérisables, en émulsion aqueuse alcaline et en presence d'initiateurs radicalaires et est caractérisé en ce que l'on ajoute, dans le mélange réactionnel, un ou plusieurs polysulfures organiques choisis parmi:

— les disulfures de di et tétra alkylthiurames dans lesquels le groupe alkyl contient 3 à 5 atomes de carbone,

— le disulfure de benzothiazyle

— les polysulfures de dibenzyle dans lesquels le nombre d'atomes de soufre est égal ou supérieur à 3.

— le trisulfure de 2, 4, 5 trichlorphényle

— le disulfure de benzanilide

et ledit polysulfure est introduit avant le début de la polymérisation en proportions comprises entre 0,1 et 2 parties pour 100 parties (en poids) de monomère chargé.

Les polysulfures utilisables appartiennent à la classe générale des composés plastifiants décrits dans le brevet US 2.234.215. Ces composés n'ont pas tous la même activité; on sait que certains d'entre eux agissent dans le milieu réactionnel comme agents de transfert de chaîne alors que d'autres ont un effet retardateur ou inhibiteur de polymérisation comme les disulfures de tétra éthyl et tétraméthyl thiruames. La demanderesse a trouvé que les polysulfures utilisés selon l'invention n'ont aucun effet retardateur de polymérisation et ont une action peptisante rapide et totale de sorte que les polymères obtenus ne peuvent plus être peptisés ultérieurement et ne subissent plus de changement de viscosité au cours du stockage.

En combinaison avec les composés précités il est possible, selon une modalité particulière, d'utiliser un disulfure ou tétrasulfure de tétraméthyl- ou tétraéthylthiurame en quantité inférieure à 0,25 partie pour 100 parties en poids de monomère. La polymérisation est conduite en émulsion aqueuse alcaline de manière connue en présence de générateurs de radicaux libres comme l'eau oxygénée, les peroxydes organiques, peroxyde de cumyle, peroxyde de dibenzoyle, les ferricyanures de métaux

2

alcalins ou d'ammonium, et de préférence les persulfates de métaux alcalins ou d'ammonium.

Comme agents émulsionnants on peut utiliser tout composé ou mélange de composés usuels tels que les sels hydrosolubles d'acides dérivés des colophanes brutes, dismutées, hydrogénées, ou partiellement polymérisées, dérivant de la gemme, du bois, de l'huile de tall. L'amulsion contient généralement une certaine quantité d'agents dispersants et stabilisants tels que les sulfates d'alcools gras, les alkylsulfates et sulfonates, les sels alcalins des acides alkyl aryl sulfoniques et plus particulièrement les sels alcalins de l'acide méthylène bis naphtalène sulfonique. On peut également ajouter de faibles quantités d'un agent de transfert de chaîne conventionnel.

Le chloroprène peut être remplacé jusqu'à 20% de son poids par un autre monomère copolymérisable. Parmi les monomères copolymérisables avec le chloroprène on peut citer les composés vinylaromatiques comme le styrène, les vinyltoluènes et vinylnaphtalènes, les acides acryliques, méthacryliques ainsi que leurs dérivés esters et nitriles comme l'acrylate d'éthyle, le méthacrylate de méthyle et l'acrylonitrile, les dioléfines conjuguées aliphatiques comme le 1—3 butadiène, l'isoprène, le 2—3 dichloro-1,3 butadiène et le 2—3 diméthyl-1,3 butadiène, les éthers et cétones vinyliques comme l'éther méthyl vinylique, l'acétate de vinyle et la méthylvinylcétone.

La concentration du ou des monomères dans l'émulsion est généralement comprise entre 30 et 60% en poids par rapport au poids total de l'émulsion.

Le taux de soufre peut varier de 0,1 à 0,6% en poids par rapport au chloroprène ou au mélange de monomères.

Les polysulfures utilisables selon l'invention sont introduits dans le milieu réactionnel en même temps que les autres réactifs avant le démarrage de la polymérisation.

La température de polymérisation peut varier de 10°C à 80°C mais elle est de préférence comprise entre 40°C et 60°C.

Le PH de l'émulsion au cours de la polymérisation est supérieur à 10, et de préférence compris entre 11 et 13.

Le taux de conversion final ne présente pas de contrainte particulière et peut varier de 50% à 90%, et de préférence de 75% à 85%,

La polymérisation peut être stoppée à tout moment par addition d'un agent inhibiteur de polymérisation conventionnel. Le monomère résiduel est éliminé par distillation flash et le caoutchouc est isolé du latex par tout moyen connu.

Le procédé selon l'invention présente un avantage économique du fait qu'il est réalisé en une seule étape sans augmentation de la durée de la polymérisation. Par ailleurs la quantité de peptisant nécessaire peut être diminuée jusqu'à 1/3 de sa valeur par rapport aux procédés classiques en deux stades.

Les polymères de chloroprène obtenus ont une viscosité Mooney comprise entre 20 et 100, de préférence entre 35 et 70. Cette valeur est stable et n'évolue pas pendant le stockage du latex et le traitement du caoutchouc. La valeur désirée peut être fixée par l'homme de l'art au moyen de quelques essais préliminaires en fonction de la quantité de soufre, de la nature et du taux d'agent peptisant ainsi que des conditions de polymérisation. Les polychloroprènes peuvent être vulcanisés avec les systèmes de vulcanisation habituellement utilisés pour les polychloroprènes modifiés au soufre, sans addition d'accélérateurs dérivés de la thiourée, et de la même manière que les polychloroprènes peptisés de manière classique par les thiurames. Les produits vulcanisés présentent d'excellentes propriétés mécaniques; ils sont supérieurs aux polychloroprènes peptisés ou modifiés selon l'art antérieur en ce qui concerne les valeurs de la déformation résiduelle après compression et de la résistance au déchirement. De ce fait, ils sont particulièrement intéressants pour la fabrication de pièces techniques telles que des joints et pièces d'amortissement.

L'invention est illustrée par les exemples suivants dans lesquels les parties sont exprimées en poids.

Exemple 1

On prépare un latex de polychloroprène modifié au soufre à l'aide d'un système d'émulsion aqueuse de composition ci-après:

3

**0 011 029**

|                                                              | Parties |
| ------------------------------------------------------------ | ------- |
| — Chloroprène                                                | 100     |
| — Acides résiniques : colophane dismutée                     | 4       |
| — Soufre                                                     | 0,20    |
| — Disulfure de tétrabutylthiurame                            | 1       |
| — Eau                                                        | 100     |
| — Hydroxyde de sodium (100%)                                 | 0,64    |
| — Sel de sodium d'acides méthylène bis alkylnaphtalenesulfonique | 0,70 |
| Solution de catalyseur:                                      |         |
| — Persulfate de sodium                                       | 1       |
| — Eau                                                        | 99      |

La polymérisation est effectuée à 50°C sous atmosphère d'azote à un PH de 12,9 et la solution de catalyseur est ajoutée en continu de manière à obtenir une vitesse de polymérisation régulière (la quantité totale introduite est d'environ 5 parties en poids). Après 4h15 la conversion du monomère est de 80%. On arrête la polymérisation par addition de 0,01 partie de p. tertiobutylcatechol et 0,01 partie de phénothiazine sous forme d'une émulsion. Le latex est ensuite traité par la vapeur d'eau pour éliminer le monomère résiduel puis refroidi. Après isolation du polymère par coagulation sur tambour froid la mesure de la viscosité Mooney (ML 1 + 4 à 100°C) donne la valeur 50.

*Essai Comparatif A*

On effectue un essai selon les mêmes conditions opératoires mais sans ajouter de thiurame au cours de la polymérisation. Après arrêt de la polymérisation le polymère isolé sur un échantillon de latex présente une viscosité de 170. On introduit alors dans le latex une partie de disulfure de tétraéthylthiurame; on agite le latex pendant 4 heures à 45°C et on le traite selon le procédé usuel. La viscosité Mooney du polymère obtenu est de 155 et le matériau est très instable au stockage.

*Essai Comparatif B*: (Procédé de peptisation selon l'art antérieur).

On renouvelle l'essai sans thiurame et l'on porte la quantité de soufre à 0,6 partie. Après l'arrêt de la polymérisation on ajoute 1,6 partie de disulfure de tétraéthylthiurame; on agite le latex 4 heures à 45°C et on le traite selon le procédé usuel. La viscosité Mooney du polymère obtenu est 50.

*Essai Comparatif C*: (Polymère modifié et non peptisé selon l'art antérieur).

On renouvelle l'essai en remplaçant le disulfure de tétrabutylthiurame par 0,4 partie de disulfure de diisopropylxanthogène. La quantité de soufre est 0,6 partie. Le polymère isolé après arrêt de la polymérisation présente une viscosité Mooney de 50.

*Proprietes mecaniques des polymeres:*

On mélange le polychloroprène obtenu selon les essais 1, 1B et 1C avec les composants suivants:

**0011029**

| | Parties en poids |
|---|---|
| — Polychloroprène | 100 |
| — Oxyde de magnésium | 4 |
| — Oxyde de zinc | 5 |
| — Acide stéarique | 0,5 |
| — Phényl-$\beta$ naphtylamine | 2 |
| — Noir SRF | 75 |
| — Huile aromatique DUTREX 729 FC | 15 |

On effectue la vulcanisation à 153°C pendant 40 minutes. Les propriétés des vulcanisats sont portées sur le tableau 1 :

Déformation rémanente à la compression (compression-set) Norme ASTM D 395—61 — Méthode B — après 96 heures à 100°C Résistance au décéhirement Norme ASTM D 624—73 — Eprouvette angulaire C.

| | Compression set % | Résistance au déchirement en kg/cm |
|---|---|---|
| 1 | 54 | 63 |
| 1 B | 63 | 54 |
| 1 C | 64 | 44 |

### Exemples 2 à 9

On prépare un polychloroprène selon le mode opératoire et à l'aide du système émulsifiant décrit à l'exemple 1. On fait varier la nature et la quantité du thiurame ou d'un mélange de thiurames selon l'invention. On fait aussi varier la quantité de soufre, la température de polymérisation et le degré de conversion du monomère (le temps de polymérisation est de 4 à 5 heures). Ces modifications et les valeurs de viscosité mesurées sur le polymère obtenu sont portées sur le tableau II. On utilise les abréviations suivantes :

TETD disulfure de tétraéthylthiurame

TITD disulfure de tétraisopropylthiurame

TBTD disulfure de tétrabutylthiurame

DPTD disulfure de dipentaméthylènethiurame

DPTT tétrasulfure de dipentaméthylènethiurame

Les résultats obtenus montrent que le procédé selon l'invention permet d'obtenir des valeurs stables de viscosité Mooney dans l'intervalle 30 à 65. L'exemple E, donné à titre comparatif, montre que le tétrasulfure de thiurame utilisé ne fonctionne pas comme agent peptisant dans le procédé selon l'invention.

### Exemples 10 à 13

On remplace le sulfure de thiurame par un polysulfure différent. On utilise 0,2 partie de soufre. La polymérisation est effectuée à 50°C et est arrêtée lorsque la conversion du monomère en polymère atteint 80%. La durée totale de la polymérisation varie de 4h30 à 5 heures. Les résultats sont portés sur le tableau III. Les exemples F, G, H sont donnés à titre comparatif.

5

## 0011029

### TABLEAU II

| Exemples | Soufre p. en poids | Thiurame | | p. en poids | Conditions opératoires | | Viscosité Mooney ML 1+4—100°C |
|---|---|---|---|---|---|---|---|
| | | | | | T° (°C) | Conversion % | |
| 2 | 0,1 | TBTD | | 2 | 40 | 60 | 60 |
| 3 | 0,6 | TITD | | 0.6 | 40 | 80 | 47 |
| 4 | 0,2 | { TBTD TETD | | 0,8 0,2 | 50 | 70 | 66 |
| 5 | 0,6 | { TBTD TETD | | 0,1 0,1 | 45 | 70 | 39 |
| 6 | 0,2 | { TBTD TETD | | 1,3 0,2 | 30 | 80 | 62 |
| 7 | 0,2 | DPTD | | 0,5 | 40 | 80 | 75 |
| 8 | 0,2 | DPTD | | 0,8 | 40 | 80 | 57 |
| 9 | 0,2 | DPTD | | 1 | 40 | 80 | 30 |
| E | 0,2 | DPTT | | 1 | 50 | 80 | 170 |

### TABLEAU III

| Exemples | 10 | F | 11 | 12 | G | H | 13 |
|---|---|---|---|---|---|---|---|
| Polysulfure (p. en poids) | | | | | | | |
| Disulfure de benzothiazyle | 1 | | | | | | |
| Mercaptobenzothiazol | | 1 | | | | | |
| Disulfure de benzanilide | | | 0,5 | | | | |
| Polysulfure de benzyle | | | | 1,1 | | | |
| Disulfure de benzyle | | | | | 1,1 | | |
| Disulfure de benzoyle | | | | | | 1 | |
| Trisulfure de 2,4,5 tri-chlorophényle | | | | | | | 1 |
| Viscosité Mooney (ML 1+4—100°C | 43 | 170 | 41 | 65 | 150 | 180 | 52 |

## Revendications

1. Procédé de préparation de polychloroprène modifié au soufre par copolymérisation du chloroprène avec du soufre, le chloroprène pouvant être remplacé jusqu'à 20% en poids par d'autres monomères éthyléniques, en émulsion aqueuse alcaline et en présence d'initiateurs radicalaires, caractérisé en ce que l'on ajoute au milieu réactionnel un ou plusieurs polysulfures organiques choisis parmi:

— les disulfures de di- et tétra- alkylthiurames dans lesquels le groupe alkyl contient 3 à 5 atomes de carbone

6

**0011029**

— le disulfure de benzothiazyle
— les polysulfures de benzyle dans lesquels le nombre d'atomes de soufre est égal ou supérieur à 3
— le trisulfure de 2,4,5 trichlorophényle
— le disulfure de benzanilide

et ledit polysulfure est introduit avant le début de la polymérisation en proportions comprises entre 0,1 et 2 parties pour 100 parties (en poids) de monomère chargé.

2. Procédé selon la revendication 1, caractérisé en ce que l'on ajoute en outre un disulfure ou tétrasulfure de tétraméthyl- ou tétraéthyl- thiurame en quantité inférieure à 0,25 partie pour 100 parties (en poids) de monomère.

3. Procédé selon l'une quelconque des revendications 1 ou 2, caractérisé en ce que la quantité de soufre est comprise entre 0,1 et 0,6% en poids par rapport au chloroprène ou au mélange de monomères.

4. Polychloroprènes et caoutchoucs vulcanisés de polychloroprènes obtenus par le procédé selon l'une quelconque des revendications 1 à 3.

**Patentansprüche**

1. Verfahren zur Herstellung von mit Schwefel modifiziertem Polychloropren durch Copolymerisation von Chloropren mit Schwefel, wobei das Chloropren bis zu 20 Gew.-% durch ein anderes ethylenisches Monomeres ersetzt sein kann, in wässrig-alkalischer Emulsion in Gegenwart eines radikalbildenden Initiator, dadurch gekennzeichnet, daß man in die Reaktionsmasse ein oder mehrere organische(s) Polysulfid(e) in Form von Di- und Tetraalkylthiuramdisulfiden, in welchen die Alkylgruppe 3 bis 5 C-Atome enthält, Benzothiazyldisulfid, Benzylpolysulfiden, in denen die Anzahl der Schwefelatome $\geq$ 3 ist, 2,4,5-Trichlorphenyltrisulfid und Benzaniliddisulfid einbringt, und zwar vor Beginn der Polymerisation in Mengen von 0,1 bis 2 Teilen auf 100 Teile (Gew.-Teile) der eingesetzten Monomeren.

2. Verfahren nach Anspruch 1, dadurch gekennzeichnet, daß man zusätzlich Tetramethyl- oder Tetraethylthiuramdi- oder tetrasulfid in einer Menge <0,25 Teile auf 100 Teile (Gew.-Teile) Monomere zusetzt.

3. Verfahren nach Anspruch 1 oder 2, dadurch gekennzeichnet, daß die Schwefelmenge 0,1 bis 0,6 Gew.-%, bezogen auf Chloropren oder das Monomer-Gemisch, beträgt.

4. Polychloroprene und deren Vulkanisate, hergestellt nach einem der Ansprüche 1 bis 3.

**Claims**

1. Process for the preparation of sulphur-modified polychloroprene by copolymerising chloroprene with sulphur, it being possible for up to 20% by weight of the chloroprene to be replaced by other ethylenic monomers, in aqueous alkaline emulsion and in the presence of free-radical initiators, characterised in that one or more organic polysulphides chosen from amongst:

dialkylthiuram and tetraalkylthiuram disulphides in which the alkyl group contains 3 to 5 carbon atoms,
benzothiazyl disulphide,
benzyl polysulphides in which the number of sulphur atoms is equal to or greater than 3,
2,4,5-trichlorophenyl trisulphide and
benzanilide disulphide,

are added to the reaction medium, and the said polysulphide is introduced, before the start of the polymerisation, in proportions of between 0,1 and 2 parts per 100 parts (by weight) of monomer introduced.

2. Process according to Claim 1, characterised in that a disulphide or tetrasulphide of tetramethylthiuram or tetraethylthiuram is also added, in an amount of less than 0.25 part per 100 parts (by weight) of monomer.

3. Process according to either one of Claims 1 or 2, characterised in that the amount of sulphur is between 0.1 and 0.6% by weight, relative to the chloroprene or to the mixture of monomers.

4. Polychloroprenes and vulcanised polychloroprene rubbers obtained by the process according to any one of Claims 1 to 3.